# EUROPEAN PATENT SPECIFICATION

(11) **EP 2 712 748 B1**
(45) Date of publication and mention of the grant of the patent: **31.05.2017**
(21) Application number: 13186248.4
(22) Date of filing: 26.09.2013
(51) Int. Cl.: B60K 1/04, B62D 21/03, B62D 21/08, B62D 21/09

(54) **Frame structure for use in truck-type electric vehicle**
Rahmenstruktur zur Verwendung in einem lastwagenartigen Elektrofahrzeug
Structure de cadre destinée à être utilisée dans un véhicule électrique de type camion

(30) Priority: 28.09.2012 JP 2012216915
(43) Date of publication of application: 02.04.2014
(73) Proprietor: Mitsubishi Jidosha Kogyo Kabushiki Kaisha, Tokyo 108-8410 (JP); Mitsubishi Jidosha Engineering Kabushiki Kaisha, Okazaki-shi, Aichi (JP)
(72) Inventor: Uchida, Takanobu, Okazaki-shi, Aichi (JP); Yakata, Takashi, Tokyo, Tokyo 108-8410 (JP); Imamura, Isahiro, Tokyo, Tokyo 108-8410 (JP); Kobayashi, Masanori, Okazaki-shi, Aichi (JP); Kawahara, Tatsuaki, Okazaki-shi, Aichi (JP); Miyashita, Kenshiro, Okazaki-shi, Aichi (JP)
(74) Representative: Vossius & Partner Patentanwälte Rechtsanwälte mbB

(56) References cited:
- CN-A- 102 358 347
- DE-U1- 29 800 368
- US-B1- 6 402 229

## Description

### BACKGROUND

The present invention relates to a frame structure to be applied to a truck-type (or pickup-type) electric vehicle equipped with a drive motor and a drive battery.

A truck-type (or pickup-type) electric vehicle having a loading platform is equipped with a frame serving as the framework of the vehicle body thereof, a cabin formed above and on the front side of the frame, a loading platform mounted behind the cabin, a drive motor, a drive battery, and the like. The frame includes a pair of left and right side members extending in the front-rear direction of the vehicle body, cross members extending in the widthwise direction of the vehicle body, and the like. The drive battery serving as the power source for the drive motor becomes large in size and heavy in weight to securely provide a predetermined running distance. In the case that such a drive battery is mounted on the truck-type electric vehicle, it has been conceived that the drive battery is disposed along the side members of the vehicle body frame and the drive battery is supported by the side members as described in FIG. 4 of JP-A-2001-97048 and in JP-A-2002-316540, for example.

In the case of a truck-type electric vehicle having a loading platform, different from a passenger car type vehicle having no loading platform, the side members thereof provided below the loading platform are usually exposed to the sides of the vehicle body. Hence, in the case that a drive battery is disposed along the side members, the drive battery is exposed from, for example, the clearance between the loading platform and the side members, as viewed from the outside of the vehicle body. As a result, electromagnetic waves emitted from the drive battery, an electromagnetic wave generation source, may leak directly around the vehicle and may cause electromagnetic interference. Furthermore, the high-voltage cable electrically connected to the drive battery may be exposed to the outside of the side members. Moreover, the drive battery is liable to be splashed with water during vehicle running in rainy weather and at the time of vehicle running in a puddle, for example, and it cannot deny the possibility that the splashed water may enter the inside of the drive battery. US 6 402 229 B1 discloses a frame structure according to the preamble of claim 1. For the purpose solving these problems, a countermeasure, such as using a protection cover to cover the drive battery, is required. However, such a countermeasure may lead to increase in the size and cost of the entire battery unit. Furthermore, in the case that the drive battery is supported by the frame (for example, the side members), the rigidity of the frame is required to be enhanced to cope with deformations, such as bending and distortion, occurring in the frame during vehicle running, for example. Moreover, it is further necessary to adopt some kind of reinforcing structure to suppress the drive battery from being broken at the time of a collision or the like.

### SUMMARY

It is therefore an object of the invention to provide a frame structure for use in a truck-type (or pickup-type) electric vehicle capable of solving the problems encountered in the case that a drive battery is mounted on the frame of the vehicle.

In order to achieve the object, according to the invention, there is provided a frame structure as defined by the features of claim 1 for use in a truck-type or pickup-type electric vehicle having a drive motor and a drive battery configured to supply electric power to the drive motor, the frame structure comprising: a frame including first and second side members extending in a front-rear direction of a vehicle body; first and second sub-frames respectively disposed on the first and second side members; and cross members provided between the first and second sub-frames and extending in a widthwise direction of the vehicle body, characterized in that the drive battery is disposed between a first side-frame structural body including the first side member and the first sub-frame, and a second side-frame structural body including the second side member and the second sub-frame.

Each of the first and second side members has a hat-shaped cross section. Each of the first and second sub-frames an inverted hat-shaped cross section. Side member covers respectively provided between the first side member and the first sub-frame, and between the second side member and the second sub-frame. A flange of the first side member, a flange of the first sub-frame and the side member cover joined, and a flange of the second side member, a flange of the second sub-frame and the side member cover jointed so that each of the first and second side-frame structural bodies has a first closed cross-section and a second closed cross-section.

One end section of one of the cross members may be inserted into a hole in the first sub-frame and is welded to the first sub-frame, and the other end section of the one of the cross members may be inserted into a hole in the second sub-frame and is welded to the second sub-frame.

A bent section protruding upward may be formed at a longitudinally central section of each of the cross members, and a bracket for supporting a part of a loading platform of the vehicle may be provided at the bent section.

Side-member extension members may be respectively provided on the first and second side members on rear sides of the first and second sub-frames.

One end section of one of the cross members may be inserted into a hole in the first sub-frame and may be welded to the first sub-frame.

A section where a loading platform is placed may be provided at each of the cross members.

According to an aspect of the invention, since the side-frame structural bodies having high strength can be provided on both sides of the drive battery in the truck-type electric vehicle, the drive battery can be protected against collision loads, for example. In addition, water splashed to the vehicle body can be prevented from entering the inside of the drive battery by the side-frame structural bodies, and electromagnetic waves emitted from the drive battery can also be suppressed from being radiated to the outside from the side sections of the vehicle body by the side-frame structural bodies. Furthermore, an electric cable or the like connected to the drive battery can be avoided from being exposed to the outside of the vehicle body by the side-frame structural bodies. Hence, it is possible to solve problems that would occur in the case that the drive battery is mounted on the frame.

### BRIEF DESCRIPTION OF THE DRAWINGS

FIG. 1 is a side view showing a truck-type (or pickup-type) electric vehicle according to an embodiment;
FIG. 2 is a bottom view showing the truck-type electric vehicle shown in FIG. 1;
FIG. 3 is a perspective view showing a part of the truck-type electric vehicle shown in FIG. 1, the loading platform thereof being removed;
FIG. 4 is a cross-sectional view showing a part of the truck-type electric vehicle shown in FIG. 1, taken in the widthwise direction of the vehicle body thereof;
FIG. 5 is a perspective view showing the side members and the sub-frame unit of the truck-type electric vehicle shown in FIG. 1;
FIG. 6 is an exploded perspective view showing a part of the truck-type electric vehicle shown in FIG. 1; and
FIG. 7 is an enlarged cross-sectional view in the vicinity of a side-frame structural body shown in FIG. 4.

### DETAILED DESCRIPTION OF EXEMPLARY EMBODIMENTS

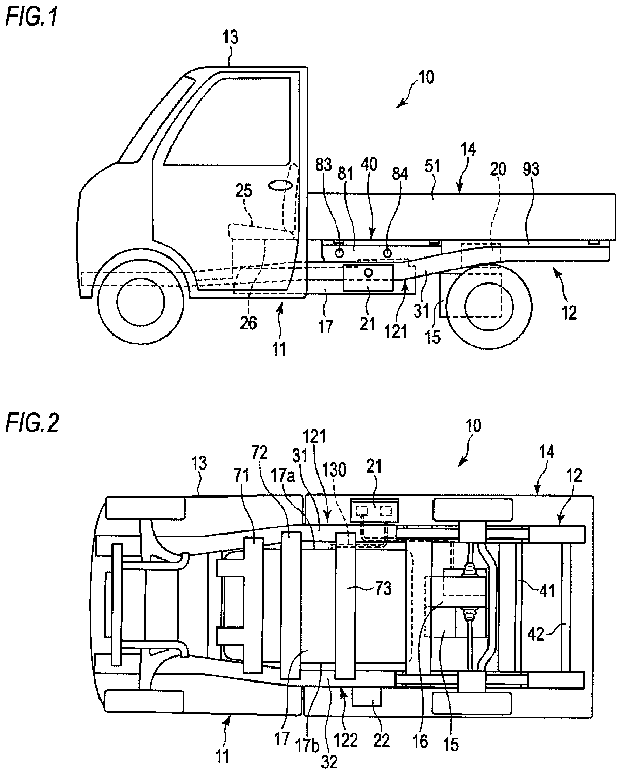

An embodiment according to the present invention will be described below referring to FIGS. 1 to 7.

FIG. 1 is a side view showing an example of a truck-type (or pickup-type) electric vehicle 10, and FIG. 2 is a bottom view showing the truck-type electric vehicle 10. The truck-type electric vehicle 10 is equipped with a frame (vehicle body frame) 12 serving as the framework of a vehicle body 11, a cabin 13 formed above and on the front side of the frame 12, a loading platform 14 provided behind the cabin 13, a drive motor 15, a transmission 16, a drive battery 17 serving as the power source for the drive motor 15, a charger 20, a charging connector box 21, a 12-volt battery 22 serving as the power source for vehicle-mounted electrical parts, and the like. A seat 25 on which an occupant sits is disposed inside the cabin 13.

As shown in FIGS. 1 and 2, the drive battery 17 is disposed between a pair of left and right side members 31 and 32 so as to extend from the lower side of a floor panel 26 positioned under the seat 25 inside the cabin 13 to the lower side and the front half section of the loading platform 14.

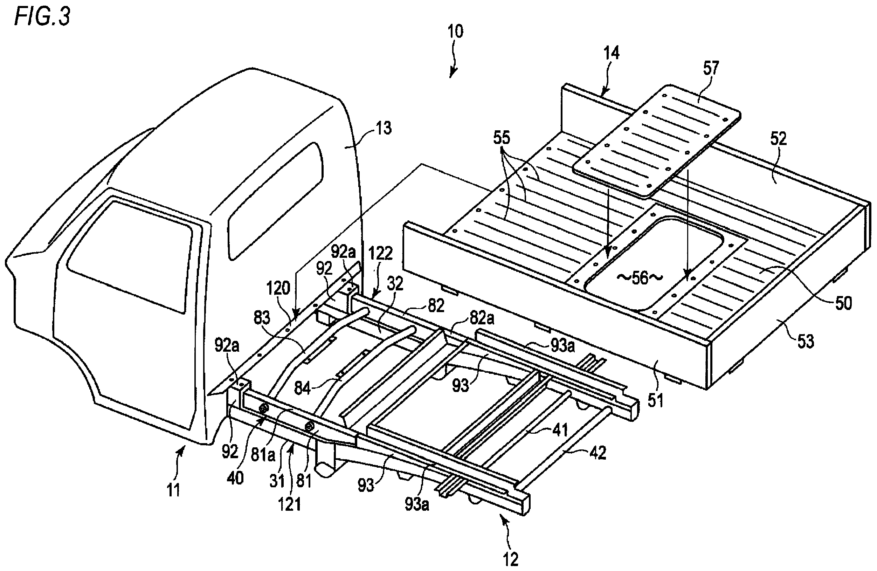

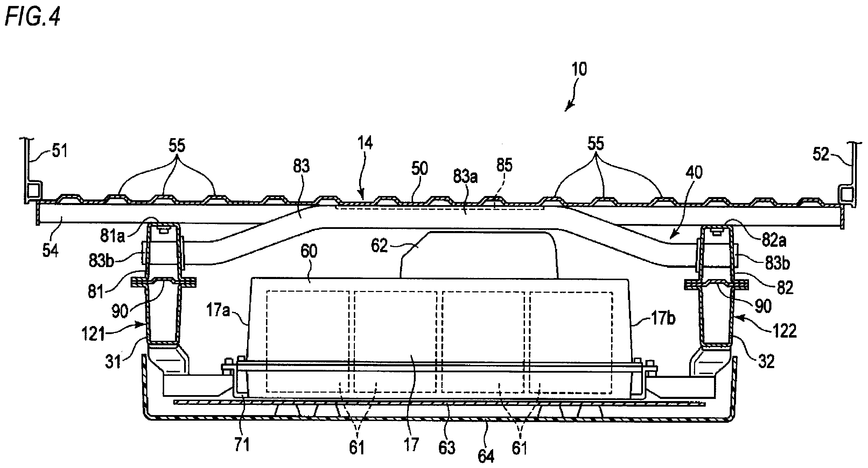

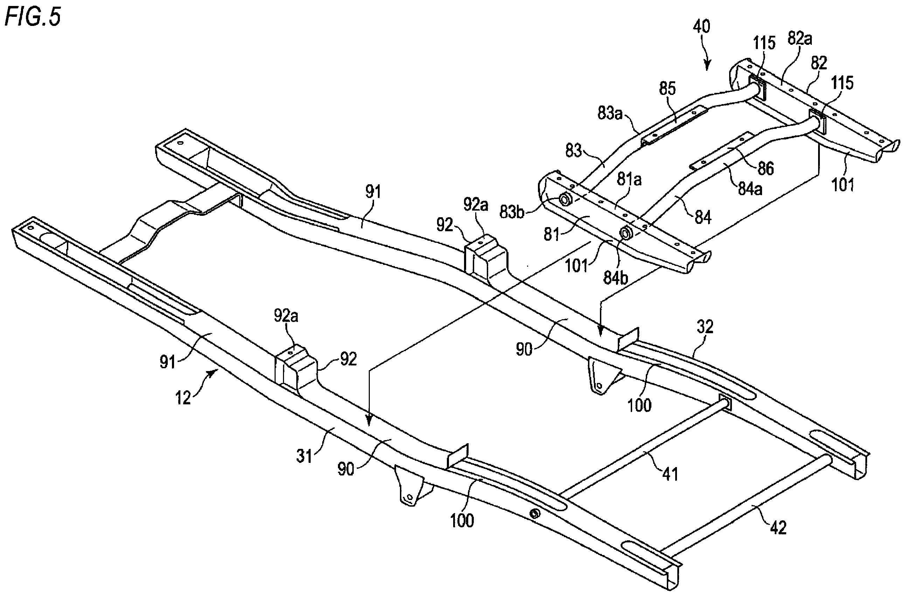

FIG. 3 is a perspective view showing a part of the vehicle body 11 and the loading platform, and FIG. 4 is a cross-sectional view taken in the widthwise direction of the vehicle 10. FIG. 5 is a perspective view showing the frame 12. The frame 12 constituting a part of the vehicle body 11 includes the pair of left and right side members 31 and 32 extending in the front-rear direction of the vehicle body 11, a sub-frame unit 40 provided on the side members 31 and 32, cross members 41 and 42 provided between the side members 31 and 32 behind the sub-frame unit 40, and the like. The cross members 41 and 42 extend in the widthwise direction of the vehicle body 11 and are secured to the predetermined positions of the side members 31 and 32 by welding. In this specification, one of the pair of side members 31 and 32 is sometimes referred to as a first side member 31 and the other is sometimes referred to as a second side member 32, for convenience of description. The sub-frame unit 40 is disposed above the drive battery 17. The sub-frame unit 40 will be described later in detail.

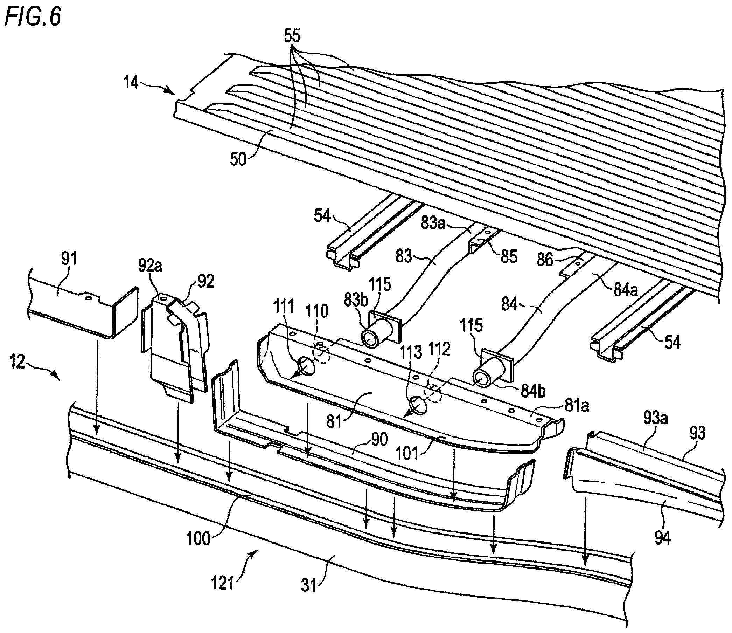

As shown in FIG. 3, the loading platform 14 includes a floor member 50 on which loads are placed, gate plates 51, 52 and 53 provided on both side sections and the rear section of the floor member 50, cross sill members 54 (shown in FIGS. 4 and 6) provided on the lower face of the floor member 50, and the like. The cross sill members 54 extend in the widthwise direction of the vehicle body 11. On the floor member 50 made of a steel plate, a plurality of bead-like reinforcing sections 55 for enhancing rigidity are formed along the front-rear direction of the vehicle body 11, for example. Furthermore, an opening 56 that can be used as an inspection window is formed in the floor member 50. The opening 56 is covered with a removable lid 57.

As shown in FIG. 4, the drive battery 17 includes a battery case 60 and battery modules 61 disposed inside the battery case 60. An example of the battery module 61 is formed of a plurality of lithium-ion battery cells connected in series. A duct section 62 through which cooling air flows is formed on the upper face side of the battery case 60. An electromagnetic shield member 63 is disposed on the lower face side of the drive battery 17. An under cover 64 is provided under the electromagnetic shield member 63. Although the electromagnetic shield member 63 shown in FIG. 4 is formed so as to be separated from the under cover 64, an electromagnetic shield member made of a metal mesh or the like may be provided inside the under cover 64 or on the upper face of the under cover 64 so as to be integrated with the under cover 64.

A plurality of beam members 71, 72 and 73 (shown in FIG. 2) are provided on the lower face side of the battery case 60. The beam members 71, 72 and 73 are made of a metallic material (for example, steel) having strength sufficient to support the weight of the drive battery 17. The drive battery 17 is supported to the side of the frame 12 formed of the side members 31 and 32 or the like, by the beam members 71, 72 and 73.

The sub-frame unit 40 is provided on the side members 31 and 32. The sub-frame unit 40 is disposed above the drive battery 17. Furthermore, the sub-frame unit 40 includes a first sub-frame 81 to be disposed on the first side member 31, a second sub-frame 82 to be disposed on the second side member 32, and cross members 83 and 84 disposed between these sub-frames 81 and 82 and extending in the widthwise direction of the vehicle body 11, and the like.

The cross members 83 and 84 are each formed of a so-called round pipe having a circular shape in its radial cross-section. Bent sections 83a and 84a, each having an upward convex shape, are formed at the longitudinally central sections of the respective cross members 83 and 84. At these bent sections 83a and 84a, brackets 85 and 86 are provided at a height capable of supporting the loading platform 14.

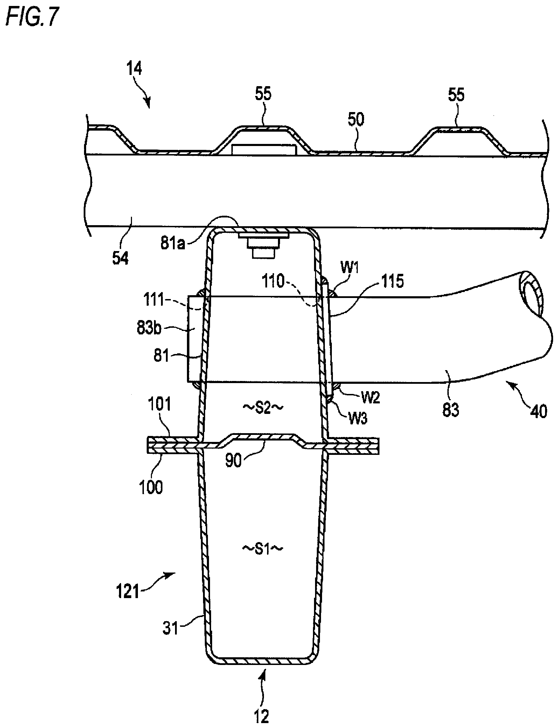

FIG. 6 is an exploded perspective view showing a part of the frame 12 and a part of the loading platform 14, and FIG. 7 is a part of FIG. 4 and is an enlarged cross-sectional view in the vicinity of the first side member 31 and the first sub-frame 81. Since the configuration on the side of the second side member 32 is similar to that on the side of the first side member 31, the configuration on the side of the first side member 31 will be described below as a representative example.

As shown in FIG. 6, side member covers 90 and 91, a mount bracket 92, a side-member extension member 93, and the like are provided on the side member 31. As shown in FIG. 7, an example of the side member 31 is made of a metallic material (for example, a steel plate) having a hat-shaped cross section and has a flange 100 at the upper end thereof. On the other hand, an example of the sub-frame 81 is made of a metallic material (for example, a steel plate) having an inverted hat-shaped cross section and has a flange 101 at the lower end thereof. A side member cover 90 is held between the flange 100 of the side member 31 and the flange 101 of the sub-frame 81, and these members are joined by spot welding, whereby the side member 31, the sub-frame 81 and the side member cover 90 are secured to one another.

A first closed cross-section S1 (shown in FIG. 7) is formed by the side member 31 and the side member cover 90 assembled by welding as described above. Furthermore, a second closed cross-section S2 is formed by the sub-frame 81 and the side member cover 90. A side-frame structural body 121 having a highly rigid two-storied structure is composed of the side member 31, the sub-frame 81 and the side member cover 90 which are used to form these closed cross-sections S1 and S2.

Moreover, the side-member extension member 93 (shown in FIGS. 1, 3 and 6) is disposed on the side member 31 and on the vehicle-body rear side of the sub-frame 81. For example, the lower section 94 of the side-member extension member 93 is inserted into the side member 31, and the inserted lower section 94 is secured to the side member 31 by securing means, such as welding. Since the configuration on the side of the second side member 32 is similar to that on the side of the first side member 31, similar components are designated by numerals common thereto and their descriptions are omitted.

As shown in FIGS. 6 and 7, the end section 83b of the cross member 83, one of the cross members, positioned on the front side of the vehicle body is inserted into the holes 110 and 111 of the sub-frame 81, and the end section 83b is welded to the sub-frame 81. The end section 84b of the other cross member 84 positioned on the rear side of the vehicle body is also inserted into the holes 112 and 113 of the sub-frame 81, and the end section 84b is welded to the sub-frame 81. Due to these configurations, torsional rigidity in the vicinity of a section where the drive battery 17 is disposed is enhanced. A reinforcing plate 115 is provided for each of the end sections 83b and 84b of the cross members 83 and 84. W1, W2 and W3 shown in FIG. 7 are some examples of welded sections. The sub-frame unit 40 sub-assembled as shown in FIG. 5 is composed of the sub-frames 81 and 82 and the cross members 83 and 84 assembled by welding as described above.

Supporting sections 81a and 82a for supporting the loading platform 14 are formed on the upper faces of the sub-frames 81 and 82. Supporting sections 92a and 93a for supporting the loading platform 14 are also formed on the upper faces of the mount brackets 92 and on the upper faces of the side-member extension members 93, respectively. A supporting section 120 (shown in FIG. 3) for supporting the front end of the loading platform 14 is formed at the rear section of the cabin 13. The loading platform 14 is placed on these supporting sections 81a, 82a, 92a, 93a and 120 and secured to the predetermined positions of the frame 12 by securing means, such as bolts or welding.

With the above-mentioned frame structure of this embodiment, the first side-frame structural body 121 having a highly rigid two-storied structure is composed of the first side member 31, the first sub-frame 81 and the first side member cover 90. The clearance between the loading platform 14 and the first side member 31 is almost blocked with the first sub-frame 81.

Furthermore, the second side-frame structural body 122 having a highly rigid two-storied structure is composed of the second side member 32, the second sub-frame 82 and the second side member cover 90. The clearance between the loading platform 14 and the second side member 32 is almost blocked with the second sub-frame 82. Both side faces 17a and 17b (shown in FIG. 4) of the drive battery 17 are opposed to the side-frame structural bodies 121 and 122, respectively.

Since the side-frame structural bodies 121 and 122 configured as described above serve as electromagnetic shields, electromagnetic waves emitted from the drive battery 17, an electromagnetic wave generation source, toward the sides of the vehicle body can be suppressed from being radiated around the vehicle 10. Furthermore, since the floor member 50 of the loading platform 14, made of steel, is disposed above the drive battery 17 and the electromagnetic shield member 63 is disposed below the drive battery 17, the electromagnetic waves can also be avoided from being radiated upward and downward from the drive battery 17. Since the floor panel 26 made of steel is disposed in front of the drive battery 17, the electromagnetic waves can also be avoided from being radiated forward from the drive battery 17. Moreover, since metallic members, such as the drive motor 15, the transmission 16, and the cross members 41 and 42, are disposed behind the drive battery 17, the electromagnetic waves can also be avoided from being radiated rearward from the drive battery 17.

Besides, since the highly rigid side-frame structural bodies 121 and 122 are disposed along both side sections of the drive battery 17, the side-frame structural bodies 121 and 122 can exert great strength against collision loads from the sides and the rear of the vehicle body 11, whereby the drive battery 17 can be suppressed from being broken.

In addition, since the drive battery 17 can be prevented from being splashed with water during vehicle running in rainy weather and at the time of vehicle running in a puddle by the side-frame structural bodies 121 and 122, the splashed water can be suppressed from entering the inside of the drive battery 17. Furthermore, since a high-voltage cable (for example, a cable 130 shown in FIG. 2) connected to the drive battery 17 can be disposed on the inner side of the side-frame structural bodies 121 and 122, the high-voltage cable can be avoided from being exposed to the outside of the vehicle body.

Still further, since the bent sections 83a and 84a protruding upward are formed at the cross members 83 and 84 of the sub-frame unit 40, the cross members 83 and 84 can be avoided from interfering with the upper face (for example, the duct section 62) of the drive battery 17, and a part of the loading platform 14 can be supported by the brackets 85 and 86 provided for the cross members 83 and 84, whereby the rigidity of the loading platform 14 can be enhanced.

With the frame structure of this embodiment, in the case that a vehicle body frame used for an existing gasoline-powered vehicle is desired to be converted into a vehicle body frame for use in a truck-type electric vehicle, for example, a frame structure for a truck-type electric vehicle on which the drive battery 17 can be mounted can be obtained relatively easily by taking a countermeasure, such as mounting the sub-frame unit 40 and the side-member extension members 93 according to this embodiment on the side members of the existing vehicle body frame.

When the present invention is put into practice, the structures, dispositions, or the like of elements constituting the side-frame structural bodies including the side members and the sub-frames can be modified and implemented appropriately as a matter of course. Furthermore, the modes of the loading platform, the drive battery, or the like are not limited to those according to the above-mentioned embodiment, but can be implemented in various modes. Moreover, the frame structure according to the present invention can be applied to not only electric automobiles running on only an electric motor but also hybrid vehicles having a drive electric motor and an engine. Namely, in the above description, the electric vehicle includes the electric automobile and the hybrid vehicle.

## Claims

1. A frame structure for use in a truck-type or pickup-type electric vehicle (10) having a drive motor (15) and a drive battery (17) configured to supply electric power to the drive motor (15), the frame structure comprising:
a frame (12) including first and second side members (31, 32) extending in a front-rear direction of a vehicle body;
first and second sub-frames (81, 82) respectively disposed on the first and second side members (31, 32); and
cross members (83, 84) provided between the first and second sub-frames (81, 82) and extending in a widthwise direction of the vehicle body, **characterized in that**
the drive battery (17) is disposed between a first side-frame structural body (121) including the first side member (31) and the first sub-frame (81), and a second side-frame structural body (122) including the second side member (32) and the second sub-frame (82); and **in that**
each of the first and second side members (31, 32) has a hat-shaped cross section,
each of the first and second sub-frames (81, 82) has an inverted hat-shaped cross section,
side member covers (90, 91) are respectively provided between the first side member (31) and the first sub-frame (81), and between the second side member (32) and the second sub-frame (82), and
a flange (100) of the first side member (31), a flange (101) of the first sub-frame (81) and the side member cover (90) are joined, and a flange (100) of the second side member (32), a flange (101) of the second sub-frame (82) and the side member cover (91) are joined so that each of the first and second side-frame structural bodies (121, 122) has a first closed cross-section (S1) and a second closed cross-section (S2).

2. The frame structure according to claim 1, **characterized in that**
one end section (83b, 84b) of one of the cross members (83, 84) is inserted into a hole (110, 111, 112, 113) in the first sub-frame (81) and is welded to the first sub-frame (81), and
the other end section (83b, 84b) of the one of the cross members (83, 84) is inserted into a hole (110, 111, 112, 113) in the second sub-frame (82) and is welded to the second sub-frame (82).

3. The frame structure according to claim 1 or 2, **characterized in that**
a bent section (83a, 84a) protruding upward is formed at a longitudinally central section of each of the cross members 83, 84), and
a bracket (85, 86) for supporting a part of a loading platform (14) of the vehicle is provided at the bent section (83a, 84a).

4. The frame structure according to any one of claims 1 to 3, **characterized in that**
side-member extension members (93) are respectively provided on the first and second side members (31, 32) on rear sides of the first and second sub-frames (81, 82).

5. The frame structure according to claim 1, **characterized in that**
one end section (83b, 84b) of one of the cross members (83, 84) is inserted into a hole (110, 111, 112, 113) in the first sub-frame (81) and is welded to the first sub-frame (81).

6. The frame structure according to claim 5, **characterized in that**
a section (83a, 84a) where a loading platform (14) is placed is provided at each of the cross members (83, 84).

## Patentansprüche

1. Rahmenstruktur für die Verwendung in einem lastwagenartigen oder pickupartigen Elektrofahrzeug (10) mit einem Antriebsmotor (15) und einer Antriebsbatterie (17), die konfiguriert ist, um elektrische Leistung an den Antriebsmotor (15) zu liefern, wobei die Rahmenstruktur aufweist:
einen Rahmen (12), der erste und zweite Seitenelemente (31, 32) umfasst, die sich in einer Vorn-Hintenrichtung eines Fahrzeugkörpers erstrecken;
erste und zweite Teilrahmen (81, 82), die jeweils auf den ersten und zweiten Seitenelementen (31, 32) angeordnet sind; und
Querträger (83, 84), die zwischen den ersten und zweiten Teilrahmen (81, 82) bereitgestellt sind und sich in einer Breitenrichtung des Fahrzeugkörpers erstrecken, **dadurch gekennzeichnet, dass**
die Antriebsbatterie (17) zwischen einem ersten Seitenrahmen-Strukturkörper (121), der das erste Seitenelement (31) und den ersten Teilrahmen (81) umfasst, und einem zweiten Seitenrahmen-Strukturkörper (122), der das zweite Seitenelement (32) und den zweiten Teilrahmen (82) umfasst, angeordnet ist; und dadurch, dass
jedes der ersten und zweiten Seitenelemente (31, 32) einen hutförmigen Querschnitt hat,
jeder der ersten und zweiten Teilrahmen (81, 82) einen invertierten hutförmigen Querschnitt hat,
Seitenelementverkleidungen (90, 91) jeweils zwischen dem ersten Seitenelement (31) und dem ersten Teilrahmen (81) und zwischen dem zweiten Seitenelement (32) und dem zweiten Teilrahmen (82) bereitgestellt sind, und
ein Flansch (100) des ersten Seitenelements (31), ein Flansch (101) des ersten Teilrahmens (81) und die Seitenelementverkleidung (90) verbunden sind, und ein Flansch (100) des zweiten Seitenelements (32), ein Flansch (101) des zweiten Teilrahmens (82) und die Seitenelementverkleidung (91) verbunden sind, so dass jeder der ersten und zweiten Seitenrahmen-Strukturkörper (121, 122) einen ersten geschlossenen Querschnitt (S1) und einen zweiten geschlossenen Querschnitt (S2) hat.

2. Rahmenstruktur nach Anspruch 1, **dadurch gekennzeichnet, dass**
ein Endabschnitt (83b, 84b) eines der Querträger (83, 84) in ein Loch (110, 111, 112, 113) in dem ersten Teilrahmen (81) eingesetzt und an den ersten Teilrahmen (81) geschweißt ist, und
der andere Endabschnitt (83b, 84b) des einen der Querträger (83, 84) in ein Loch (110, 111, 112, 113) in dem zweiten Teilrahmen (82) eingesetzt und an den zweiten Teilrahmen (82) geschweißt ist.

3. Rahmenstruktur nach Anspruch 1 oder 2, **dadurch gekennzeichnet, dass**
ein gekrümmter Abschnitt (83a, 84a), der nach oben vorsteht, an einem in der Längsrichtung mittleren Abschnitt jedes der Querträger (83, 84) ausgebildet ist, und
eine Halterung (85, 86) zum Halten eines Teils einer Ladeplattform (14) des Fahrzeugs an dem gekrümmten Abschnitt (83a, 84a) bereitgestellt ist.

4. Rahmenstruktur nach einem der Ansprüche 1 bis 3, **dadurch gekennzeichnet, dass**
seitliche Erstreckungselemente (93) jeweils auf den ersten und zweiten Seitenelementen (31, 32) auf Rückseiten der ersten und zweiten Teilrahmen (81, 82) bereitgestellt sind.

5. Rahmenstruktur nach Anspruch 1, **dadurch gekennzeichnet, dass**
ein Endabschnitt (83b, 84b) eines der Querträger (83, 84) in ein Loch (110, 111, 112, 113) in dem ersten Teilrahmen (81) eingesetzt und an den ersten Teilrahmen (81) geschweißt ist.

6. Rahmenstruktur nach Anspruch 5, **dadurch gekennzeichnet, dass**
ein Abschnitt (83a, 84a), in dem eine Ladeplattform (14) angeordnet ist, an jedem der Querträger (83, 84) bereitgestellt ist.

## Revendications

1. Structure de cadre destinée à être utilisée dans un véhicule électrique de type camion ou pickup (10) possédant un moteur d'entraînement (15) et une batterie de traction (17) configurée pour fournir de l'énergie électrique au moteur d'entraînement (15), la structure de cadre comprenant :
un cadre (12) comprenant des premier et second éléments latéraux (31, 32) s'étendant dans une direction avant-arrière d'une carrosserie de véhicule ;
des premier et second cadres auxiliaires (81, 82) respectivement disposés sur les premier et second éléments latéraux (31, 32) ; et
des éléments transversaux (83, 84) disposés entre les premier et second cadres auxiliaires (81, 82) et s'étendant dans une direction de la largeur de la carrosserie de véhicule, **caractérisée en ce que**
la batterie de traction (17) est disposée entre un premier corps structural de cadre latéral (121) comprenant le premier élément latéral (31) et le premier cadre auxiliaire (81), et un second corps structural de cadre latéral (122) comprenant le second élément latéral (32) et le second cadre auxiliaire (82) ; et **en ce que**
chacun des premier et second éléments latéraux (31, 32) possède une section transversale en forme de chapeau,
chacun des premier et second cadres auxiliaires (81, 82) possède une section en forme de chapeau inversée,
des couvercles d'élément latéral (90, 91) sont respectivement fournis entre le premier élément latéral (31) et le premier cadre auxiliaire (81), et entre le second élément latéral (32) et le second cadre auxiliaire (82), et
une bride (100) du premier élément latéral (31), une bride (101) du premier cadre auxiliaire (81) et le couvercle d'élément latéral (90) sont reliés, et une bride (100) du second élément latéral (32), une bride (101) du second cadre auxiliaire (82) et le couvercle d'élément latéral (91) sont reliés de sorte que chacun des premier et second corps structuraux de cadre latéral (121, 122) possède une première section transversale fermée (S1) et une seconde section transversale fermée (S2).

2. Structure de cadre selon la revendication 1, **caractérisée en ce que**
une section d'extrémité (83b, 84b) d'un des éléments transversaux (83, 84) est insérée dans un orifice (110, 111, 112, 113) dans le premier cadre auxiliaire (81) et elle est soudée au premier cadre auxiliaire (81), et
l'autre section d'extrémité (83b, 84b) de l'un des éléments transversaux (83, 84) est insérée dans un orifice (110, 111, 112, 113) dans le second cadre auxiliaire (82) et elle est soudée au second cadre auxiliaire (82).

3. Structure de cadre selon la revendication 1 ou 2, **caractérisée en ce que**
une section coudée (83a, 84a) faisant saillie vers le haut est formée au niveau d'une section centrale dans un sens longitudinal de chacun des éléments transversaux (83, 84), et
un support (85, 86) pour supporter une partie d'une plate-forme de chargement (14) du véhicule est fourni au niveau de la section coudée (83a, 84a).

4. Structure de cadre selon l'une quelconque des revendications 1 à 3, **caractérisée en ce que**
des éléments d'extension d'élément latéral (93) sont respectivement fournis sur les premier et second éléments latéraux (31, 32) sur des côtés arrière des premier et second cadres auxiliaires (81, 82).

5. Structure de cadre selon la revendication 1, **caractérisée en ce que**
une section d'extrémité (83b, 84b) d'un des éléments transversaux (83, 84) est insérée dans un orifice (110, 111, 112, 113) dans le premier cadre auxiliaire (81) et est soudée au premier cadre auxiliaire (81).

6. Structure de cadre selon la revendication 5, **caractérisée en ce que**
une section (83a, 84a) où une plate-forme de chargement (14) est disposée, est fournie au niveau de chacun des éléments transversaux (83, 84).
